# FASCICULE DE BREVET EUROPEEN

(11) **EP 2 848 497 B1**
(45) Date de publication et mention de la délivrance du brevet: **06.04.2016**
(21) Numéro de dépôt: 14182965.5
(22) Date de dépôt: 29.08.2014
(51) Int. Cl.: B62D 11/08, B62D 11/10

(54) **Mécanisme de pivot pour véhicule militaire**
Schwenkmechanismus für Militärfahrzeug
Pivot mechanism for military vehicle

(30) Priorité: 17.09.2013 FR 1302168
(43) Date de publication de la demande: 18.03.2015
(73) Titulaire: NEXTER Systems, 42328 Roanne (FR)
(72) Inventeur: Le Trouher, Guy, 18023 BOURGES (FR)
(74) Mandataire: Cabinet Chaillot

(56) Documents cités:
- US-A- 3 316 992

## Description

Le domaine technique de l'invention est celui des dispositifs de direction pour véhicules militaires à roues.

Afin de diriger un véhicule militaire à roues il est classiquement utilisé un train de direction comportant des roues aptes à être orientées par braquage autour d'un axe sensiblement vertical afin de les diriger dans la direction à donner au véhicule.

Cependant, pour diminuer au maximum le rayon de virage il est possible de concevoir un dispositif de direction par ripage dans lequel le virage est obtenu en empêchant la rotation des roues du coté où l'on souhaite tourner tout en donnant leur pleine motricité aux roues du côté opposé. Pour cela le véhicule doit être équipé d'un différentiel apte à bloquer l'une de ses sorties à destination des roues.

Un tel dispositif ne permet pas d'obtenir le virage le plus serré possible qui consiste à faire pivoter le véhicule sur lui-même.

On connaît aussi par le brevet US3316992 un mécanisme de direction par ripage dans lequel on superpose une vitesse de rotation, à l'aide de trains épicycloïdaux, au niveau de chaque roue de chaque essieu. Les vitesses superposées ont un sens inverse entre les roues droite et gauche de chaque essieu et le niveau des vitesses superposées est supérieur pour les essieux situés à distance du centre de rotation du véhicule à celui des vitesses superposées pour l'essieu passant par le centre de rotation. Les valeurs des vitesses superposées répondent par ailleurs à des équations cinématiques bien définies. Il n'est cependant pas question ici d'utiliser les trains épicycloïdaux pour inverser le sens de rotation d'une des roues de chaque essieu.

Un tel dispositif ne permet pas non plus d'obtenir le virage le plus serré possible qui consiste à faire pivoter le véhicule sur lui-même.

Un véhicule selon le préambule de la revendication 1 est divulgué dans la demande de brevet US3316992.

L'invention vise à résoudre ce problème en permettant au véhicule de faire un pivot sur lui-même en inversant le sens de rotation des roues d'un même essieu.

Avantageusement, l'invention propose un moyen de pivotement peu encombrant.

Avantageusement, l'invention fournit un rapport de réduction de vitesse entre les roues et agit ainsi en réducteur.

Ainsi l'invention porte sur un véhicule motorisé à roues comportant au moins deux essieux comportant chacun deux arbres de transmission de la puissance motrice reliés à des roues par une première de leurs extrémités, véhicule caractérisé en ce que chaque arbre comporte au moins un mécanisme d'inversion de sens de rotation, mécanisme comportant un train épicycloïdal disposant d'une couronne solidaire d'une roue, d'un solaire solidaire d'un arbre, un porte satellites et de satellites engrenant avec le solaire et la couronne, mécanisme comportant au moins un moyen de crabotage apte à faire accoupler ou désaccoupler le porte satellite et le solaire et à faire accoupler ou désaccoupler le porte satellite avec une partie fixe du véhicule, mécanisme d'inversion comportant un moyen de commande actionnant le crabotage.

Avantageusement, le moyen de crabotage comporte un manchon apte à coulisser sur l'axe de porte satellite.

Avantageusement, le moyen de crabotage comporte au moins une première garniture d'embrayage solidaire du porte satellite et une seconde garniture d'embrayage solidaire de l'axe de solaire apte à être accouplée ou désaccouplée par un moyen de commande.

Avantageusement, le rapport de réduction du train épicycloïdal est compris entre 2,4 et 6.

L'invention sera mieux comprise à la lecture de la description suivante, description faite en référence aux dessins annexés dans lesquels :
La figure 1 représente une vue de dessus schématique des parties roulantes d'un véhicule Selon l'invention.
La figure 2 représente une vue schématique d'un mécanisme d'inversion en position non inversée.
La figure 3 représente une vue schématique d'un mécanisme d'inversion en position inversée.

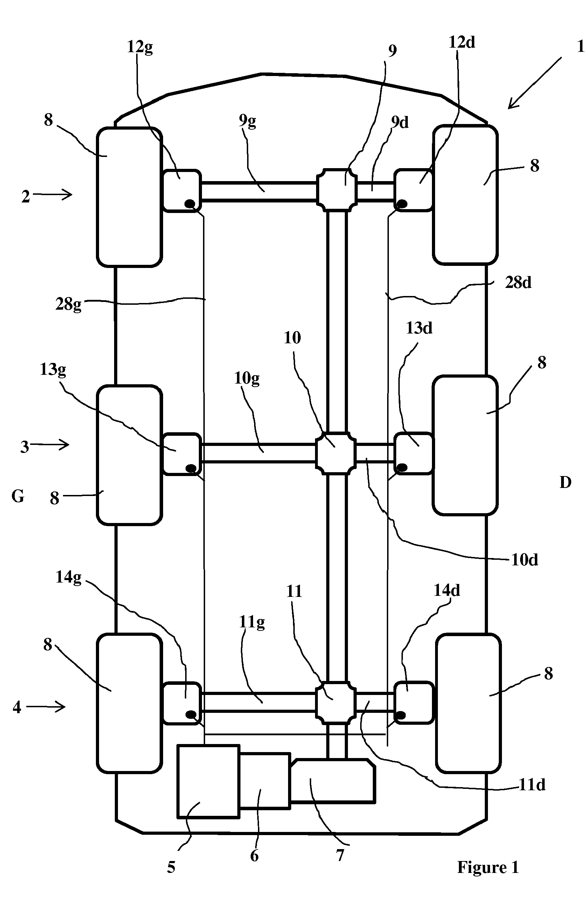

Selon la figure 1, un véhicule 1 comporte trois essieux 2,3,4. Le véhicule est propulsé par un groupe motopropulseur 5 accouplé à une boite de vitesse 6. La transmission du véhicule 1 est intégrale et comporte un boitier de transfert 7 accouplé à la sortie de boite de vitesse 6 afin de transférer l'énergie fournie par le moteur 5 à des ponts différentiels 9,10,11 situés sur chacun des essieux 2,3,4. La seconde extrémité de chaque arbre 9d,10d,11d,9g,10g,11g est reliée à une roue 8 du véhicule 1. Chaque différentiel 9, 10, 11 a pour rôle de transmettre l'énergie motrice à un premier arbre situé à droite 9d, 10d, 11d du véhicule 1 et à un second arbre situé à gauche 9g, 10g, 11g du véhicule tout en compensant les pertes de motricité entre roues gauches et roues droites lors des virages par répartition des différences de vitesse de rotation entre roues droites et roues gauches.

Chaque arbre comporte un mécanisme 12, 13 ou 14 d'inversion du sens de rotation à son extrémité non liée au différentiel 9,10,11. On notera sur les figures 12d,13d,14d les mécanismes situés à droite et 12g,13g,14g les mécanismes situés à gauche. Chaque mécanisme 12d,13d,14d,12g,13g,14g est solidaire du moyeu d'une roue. Un premier dispositif de tringlerie ou d'actionneur motorisé assure le rôle de moyen de commande 28g de tous les mécanismes 12g,13g,14g situés à gauche G du véhicule, alors qu'un second moyen de commande 28d assure le même rôle pour tous les mécanismes 12d,13d,14d situés sur la droite D du véhicule 1. Tous les mécanismes 12, 13 et 14 ont une structure identique et la description qui va suivre d'un mécanisme 12g monté au niveau de la roue avant gauche permet aussi de connaitre la structure des autres mécanismes 13 et 14 qu'ils soient montés à droite ou à gauche.

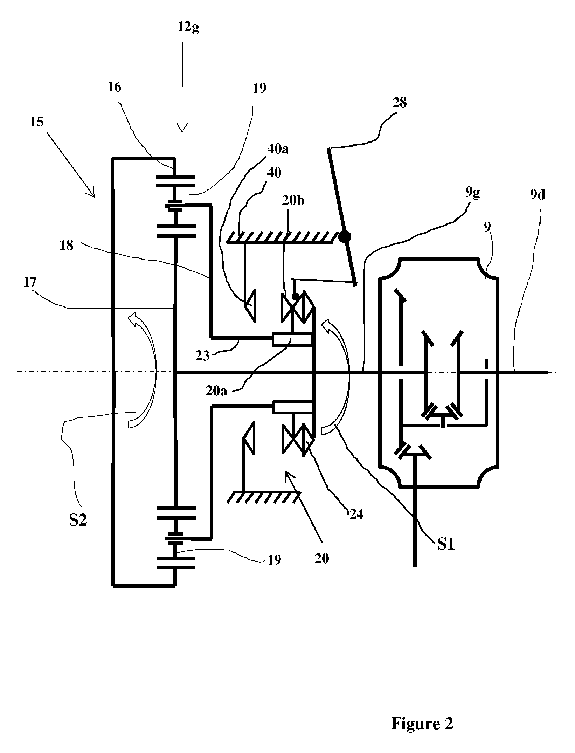

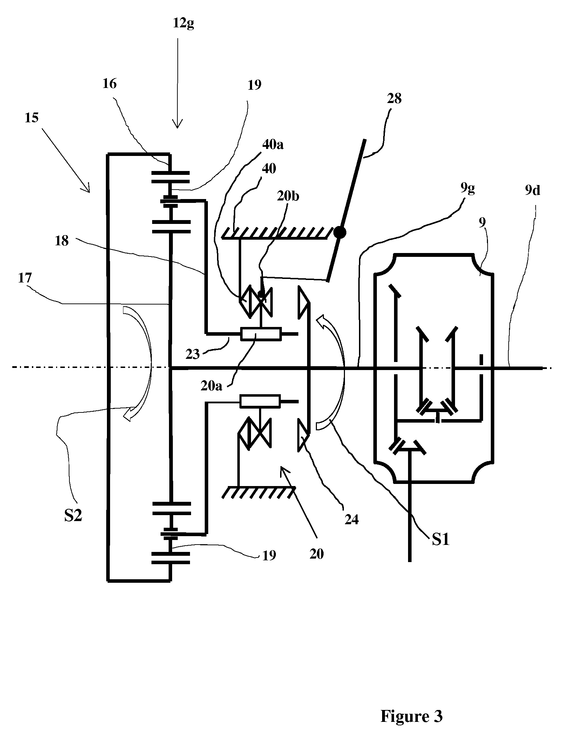

Selon les figures 2 et 3, chaque mécanisme 12, 13 ou 14 (ici c'est 12g qui est représenté) comporte un train épicycloïdal 15 comportant une couronne à denture interne 16 coaxialement reliée au moyeu de la roue (moyeu non représenté), un pignon denté dit solaire 17 coaxialement relié à un arbre 9g, un porte satellite 18 apte à pivoter autour de l'axe du solaire 17 et des pignons dits satellites 19 situés à la périphérie du porte satellite 18 et engrenant simultanément avec le solaire 17 et la couronne 16. Le mécanisme 12 comporte également un moyen de crabotage 20 permettant d'accoupler ou de désaccoupler le solaire 17 avec le porte satellites 18, et respectivement de désaccoupler ou d'accoupler le porte satellite 18 avec une partie fixe du véhicule telle que le châssis 40.

Le moyen de crabotage 20 comporte un manchon 20a apte à coulisser sous l'action du moyen de commande 28 le long de l'axe 23 de porte satellite 18 tout en étant lié en rotation à cet axe 23. Une première garniture d'embrayage 20b ayant deux faces d'embrayage est solidaire de la glissière 20a et elle est apte à correspondre par l'une de ses deux faces avec une seconde garniture d'embrayage 24 solidaire de l'arbre 9g comme à la figure 2. Elle peut correspondre par son autre face avec une troisième garniture 40a solidaire d'une partie fixe du véhicule 40 comme à la figure 3.

Ainsi, selon la figure 2, lorsque le moyen de commande 28 provoque la translation de la glissière 20a jusqu'à plaquer la première garniture 20b contre la seconde garniture 24, le porte satellite 18 se trouve alors solidaire en rotation de l'arbre 9g et donc solidaire du solaire 17. Dans une telle configuration, les satellites 19 solidarisent en rotation le solaire 17 et la couronne 16. De ce fait, l'arbre d'entrée 9g et la roue 8 solidaire de la couronne 16, tournent alors dans le même sens S1 et à la même vitesse selon un rapport 1.

A l'inverse, selon la figure 3, lorsque le moyen de commande 28 provoque la translation de la glissière 20a jusqu'à plaquer l'autre face de la première garniture 20b contre la troisième garniture 40a, le porte satellite 18 se trouve alors solidaire d'une partie fixe 40 du véhicule et donc immobile en rotation. Seuls les satellites 19 peuvent alors tourner sous l'action de la rotation du solaire 17. La transmission de la rotation du solaire 17 à la couronne 16 par l'engrenage avec les satellites 19 provoque la rotation de la couronne 16 en sens inverse S2 du sens S1 du solaire 17. De ce fait, l'arbre d'entrée 9g et la roue, solidaire de la couronne 16, tournent en sens inverse selon un rapport de réduction compris entre 2,4 et 6 selon le choix de l'homme du métier, ce qui privilégie avantageusement la fourniture de couple pour les opérations de franchissement en fournissant un réducteur de vitesse. Le mécanisme 12, 13 ou 14 peut être logé dans le moyeu de la roue et il est donc peu encombrant.

Comme visible à la figure 1, l'emploi d'un différentiel 9 en entrée impose, pour un même essieu 2, l'emploi d'un second mécanisme d'inversion du sens de rotation 12d pour la roue droite. Et il en est de même pour chaque essieu.

Ainsi, lorsque tous les arbres du véhicule tournent dans le sens d'avancement, pour obtenir par exemple un pivotement à droite du véhicule, le conducteur va actionner le premier moyen de commande 28g de manière à ce que les arbres de gauche et les roues gauches tournent dans le même sens que les arbres, c'est-à-dire en solidarisant les portes satellites avec les solaires pour chaque mécanisme de gauche.

En parallèle, il va actionner le second moyen de commande de droite 28d de manière à faire tourner les roues droites en sens inverse du sens d'avancement donné par les arbres donc en solidarisant les porte satellites et le châssis du véhicule.

Avantageusement, en actionnant simultanément le premier et second moyen de commande de manière à ce que tous les porte satellites et le châssis du véhicule soient solidaires, il obtiendra un fonctionnement en marche arrière du véhicule avec un rapport de réduction alors que les arbres tournent dans le sens de la marche avant.

L'homme du métier pourra employer d'autres moyens de crabotages tels que des dispositifs à cannelures.

## Revendications

1. Véhicule (1) motorisé à roues (8) comportant au moins deux essieux (2,3,4) comportant chacun deux arbres (9g,9d,10g,10d,11g,11d) de transmission de la puissance motrice reliés à des roues (8) par une première de leurs extrémités, chaque arbre (9g,9d,10g,10d,11g,11d) comportant au moins un mécanisme (12g,12d,13g,13d,14g,14d) d'inversion de sens de rotation, mécanisme (12g,12d,13g,13d,14g,14d) comportant un train épicycloïdal (15), **caractérisé en ce que** train épicycloïdal (15) comporte d'une couronne (16) solidaire d'une roue (8), d'un solaire (17) solidaire d'un arbre, un porte satellites (18) et de satellites (19) engrenant avec le solaire (17) et la couronne (16), mécanisme (12g,12d,13g,13d,14g,14d) comportant au moins un moyen de crabotage (20) apte à faire accoupler ou désaccoupler le porte satellite (18) et le solaire (17) et à faire accoupler ou désaccoupler le porte satellite (18) avec une partie fixe (40) du véhicule (1), mécanisme (12g,12d,13g,13d,14g,14d) d'inversion comportant un moyen de commande (28) actionnant le crabotage (20).

2. Véhicule (1) motorisé à roues (8) selon la revendication 1, **caractérisé en ce que** le moyen de crabotage (20) comporte un manchon (20a) apte à coulisser sur l'axe (23) de porte satellite (18).

3. Véhicule (1) motorisé à roues (8) selon la revendication 2, **caractérisé en ce que** le moyen de crabotage (20) comporte au moins une première garniture d'embrayage (20b) solidaire du porte satellite (18) et une seconde garniture d'embrayage (24) solidaire de l'axe de solaire (23) apte à être accouplée ou désaccouplée par un moyen de commande (28).

4. Véhicule (1) motorisé à roues (8) selon une des revendications 1 à 3, **caractérisé en ce que** le rapport de réduction du train épicycloïdal (15) est compris entre 2,4 et 6.

## Patentansprüche

1. Kraftfahrzeug (1) mit Rädern (8), das mindestens zwei Achsen (2, 3, 4) aufweist, die jeweils zwei Wellen (9g, 9d, 10g, 10d, 11g, 11d) zur Übertragung der Antriebskraft aufweisen, die mit den Rädern (8) über ein erstes ihrer Enden verbunden sind, wobei jede Welle (9g, 9d, 10g, 10d, 11g, 11d) mindestens einen Mechanismus (12g, 12d, 13g, 13d, 14g, 14d) zur Umkehr der Drehrichtung aufweist, wobei der Mechanismus (12g, 12d, 13g, 13d, 14g, 14d) ein Planetengetriebe (15) aufweist, **dadurch gekennzeichnet, dass** das Planetengetriebe (15) ein Hohlrad (16), das fest mit einem Rad (8) verbunden ist, ein Sonnenrad (17), das fest mit einer Welle verbunden ist, einen Planetenradträger (18) und Planetenräder (19) aufweist, die mit dem Sonnenrad (17) und dem Hohlrad (16) in Eingriff stehen, wobei der Mechanismus (12g, 12d, 13g, 13d, 14g, 14d) mindestens ein Klauenkupplungsmittel (20) aufweist, das in der Lage ist, den Planetenradträger (18) und das Sonnenrad (17) zu verbinden und zu trennen und den Planetenradträger (18) mit einem festen Teil (40) des Fahrzeugs (1) zu verbinden und zu trennen, wobei der Umkehrmechanismus (12g, 12d, 13g, 13d, 14g, 14d) ein Betätigungsmittel (28) aufweist, das die Klauenkupplung (20) betätigt.

2. Kraftfahrzeug (1) mit Rädern (8) nach Anspruch 1, **dadurch gekennzeichnet, dass** das Klauenkupplungsmittel (20) eine Muffe (20a) aufweist, die auf der Achse (23) des Planetenradträgers (18) verschoben werden kann.

3. Kraftfahrzeug (1) mit Rädern (8) nach Anspruch 2, **dadurch gekennzeichnet, dass** das Klauenkupplungsmittel (20) mindestens einen ersten Kupplungsbelag (20b) aufweist, der fest mit dem Planetenradträger (18) verbunden ist, und einen zweiten Kupplungsbelag (24), der fest mit der Achse des Sonnenrads (23) verbunden ist und durch ein Betätigungsmittel (28) angekoppelt oder getrennt werden kann.

4. Kraftfahrzeug (1) mit Rädern (8) nach einem der Ansprüche 1 bis 3, **dadurch gekennzeichnet, dass** das Untersetzungsverhältnis des Planetengetriebes (15) zwischen 2, 4 und 6 beträgt.

## Claims

1. A motor vehicle (1) with wheels (8) comprising at least two axles (2,3,4) each comprising two drive power transmission shafts (9g,9d,10g,10d,11g,11d) connected to wheels (8) by a first of their ends, each shaft (9g,9d,10g,10d,11g,11d) comprising at least one rotation direction reversing mechanism (12g,12d,13g,13d,14g,14d), the mechanism (12g,12d,13g,13d,14g,14d) comprising a planetary gear train (15), **characterized in that** the planetary gear train (15) has a ring gear (16) integral with a wheel (8), a sun gear (17) integral with a shaft, a planet carrier (18) and planet gears (19) meshing with the sun gear (17) and the ring gear (16), the mechanism (12g,12d,13g,13d,14g,14d) comprising at least one ring dogging means (20) capable of engaging or disengaging the planet carrier (18) and the sun gear (17) and of engaging or disengaging the planet carrier (18) with/from a fixed part (40) of the vehicle (1), the reversing mechanism (12g,12d,13g,13d,14g,14d) comprising a control means (28) operating the ring dogging (20).

2. The motor vehicle (1) with wheels (8) according to claim 1, wherein the ring dogging means (20) comprises a sleeve (20a) slidable on the axis (23) of the planet carrier (18).

3. The motor vehicle (1) with wheels (8) according to claim 2, wherein the ring dogging means (20) comprises at least one first clutch lining (20b) integral with the planet carrier (18) and a second clutch lining (24) integral with the axis of the sun gear (23), capable of being engaged or disengaged by a control means (28).

4. The motor vehicle (1) with wheels (8) according to one of claims 1 to 3, wherein the speed reducing ratio of the planetary gear train (15) is between 2.4 and 6.
